# EUROPEAN PATENT APPLICATION

(11) **EP 2 133 219 A1**
(43) Date of publication of application: **16.12.2009**
(21) Application number: 08722691.6
(22) Date of filing: 24.03.2008
(51) Int. Cl.: B60C 19/12, B29C 73/10, B29L 30/00

(54) **PNEUMATIC TIRE**

(30) Priority: 02.04.2007 JP 2007096468
(71) Applicant: The Yokohama Rubber Co., Ltd., Minato-ku Tokyo 105-8685 (JP)
(72) Inventor: SEKIGUCHI, Takumi, Hiratsuka-shi Kanagawa 254-8601 (JP)
(74) Representative: HOFFMANN EITLE
(86) International application number: PCT/JP2008/055375
(87) International publication number: WO 2008/123175

(57) **Abstract**

Provided is a pneumatic tire including a puncture-resistant layer disposed on the inner side of a tread portion while having enhanced uniformity. A gel sheet 5 is disposed, as a puncture-resistant layer, on the inner side of an inner liner 4 in a region corresponding to a tread portion 1, the gel sheet made of a silicone compound, a urethane compound, a styrene compound, or an ethylene compound, the gel sheet having needle penetration of 50 or more after curing and having an Asker C hardness of 40 or less.

## Description

### TECHNICAL FIELD

The present invention relates to a pneumatic tire, more specifically, a pneumatic tire including a puncture-resistant layer disposed on the inner side of a tread portion, while having enhanced uniformity.

### BACKGROUND ART

A large number of proposals have been made on a pneumatic tire having, as a puncture-resistant layer, an adhesive sealant disposed on the inner side of a tread portion in order to secure safety of a vehicle in the case where the pneumatic tire runs over a nail or the like while the vehicle is running. When a puncture occurs as a result of the tire running over the nail, the adhesive sealant flows into a puncture hole created after the nail is detached from the tire due to a centrifugal force, and thus avoids a rapid decrease of the tire inflation pressure (See Patent Document 1, for example).

In the pneumatic tire of this type, however, the centrifugal force at the time of high speed running causes the adhesive sealant to flow along an inner wall of the tire and concentrate in a center region of the tire in the tire width direction. In addition, repeated deformation of the tread causes the adhesive sealant to flow into a specific area on the inner surface of the tire. These phenomena deteriorate uniformity of the tire, and accordingly bring about a problem that the deteriorated uniformity causes vibrations.

As means for solving the above problem, an approach of impregnating a sponge layer with a sealant to suppress the movement (fluidity) of the sealant is also proposed (See Patent Document 2). Because of using an uncrosslinked sealant in general, impregnating a sponge with the sealant is not a sufficient measure, even though the flow of the sealant during running is suppressed to some extent.
Patent Document 1: Japanese patent application *Kokai* publication No. 2003-183623
Patent Document 2: Japanese patent application *Kokai* publication No. 2003-326926

### DISCLOSURE OF THE INVENTION

### PROBLEM TO BE SOLVED BY THE INVENTION

An object of the present invention is to provide a pneumatic tire for solving the foregoing conventional problems, the pneumatic tire including a puncture-resistant layer disposed on the inner side of a tread portion, while having enhanced uniformity.

### MEANS FOR SOLVING THE PROBLEM

A pneumatic tire according to the present invention made for attaining the foregoing object is **characterized in that** a gel sheet is disposed, as a puncture-resistant layer, on the inner side of an inner liner in a region corresponding to a tread portion, the gel sheet made of any of a silicone compound, a urethane compound, a styrene compound, and an ethylene compound, the gel sheet having needle penetration of 50 or more after curing and having an Asker C hardness of 40 or less.

In addition, it is preferable that the aforementioned pneumatic tire should be configured as described in the following points (1) to (4).

(1) The compression set of the gel sheet is set at 20% or less.
(2) The thickness of the gel sheet is set at 2 mm to 6 mm inclusive.
(3) A barrier sheet made of a resin film is disposed between the inner liner and the gel sheet.
(4) The inner surface of the gel sheet is coated with a protective sheet made of a resin film.

### EFFECTS OF THE INVENTION

According to the present invention, a gel sheet is disposed, as a puncture-resistant layer, on the inner side of an inner liner in a region corresponding to a tread portion, the gel sheet made of any of a silicone compound, a urethane compound, a styrene compound, and an ethylene compound, the gel sheet having needle penetration of 50 or more after curing and having an Asker C hardness of 40 or less. When a puncture hole passing through the gel sheet is created, the gel sheet around the puncture hole contracts to seal the puncture hole after a foreign substance such as a nail is detached and thus a rapid decrease in a tire inflation pressure is prevented.

In addition, because the gel sheet described above has no substantial fluidity, the gel sheet neither concentrates at a center region in the tire width direction nor is unevenly distributed even when the tire rotates in a high speed. Consequently, the uniformity of the tire is maintained.

### BRIEF DESCRIPTION OF THE DRAWINGS

[Fig. 1] Fig. 1 is a sectional view illustrating a pneumatic tire according to an embodiment of the present invention.
[Fig. 2] Fig. 2 is a sectional view illustrating a principal part of a pneumatic tire according to another embodiment of the present invention.
[Fig. 3] Fig. 3 is a sectional view illustrating a principal part of a pneumatic tire according to still another embodiment of the present invention.

### EXPLANATION OF REFERENCE NUMERALS

- 1: tread portion
- 4: inner liner
- 5: gel sheet
- 7: barrier sheet
- 8: protective sheet

### BEST MODES FOR CARRYING OUT THE INVENTION

Hereinafter, a configuration of the present invention will be described in detail with reference to the accompanying drawings.

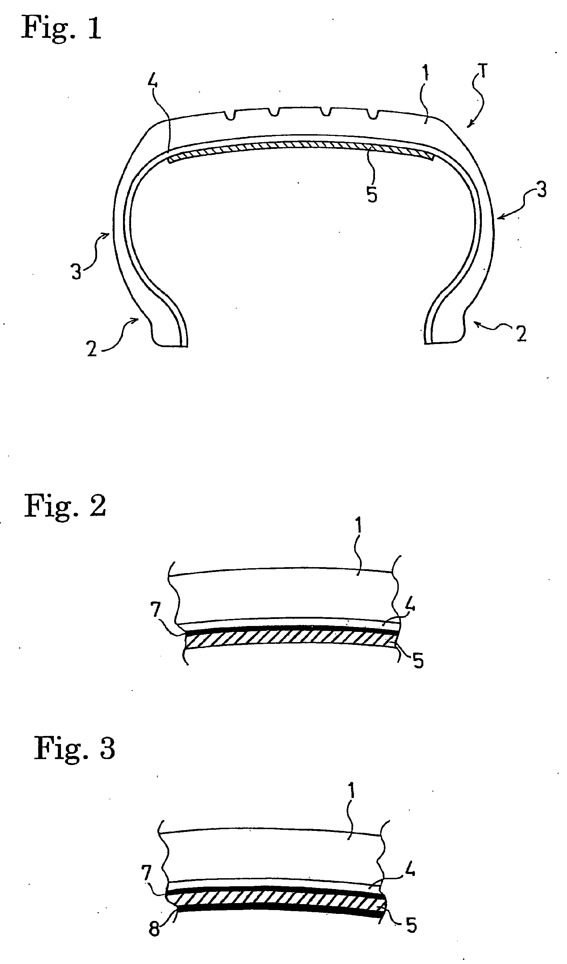

Fig. 1 is a sectional view illustrating a pneumatic tire according to an embodiment of the present invention. Fig. 1 shows that a pneumatic tire T includes a tread portion 1, a pair of left and right bead portions 2, 2, and sidewall portions 3, 3 connecting the tread portion 1 with the bead portions 2, 2. A gel sheet 5 is disposed, as a puncture-resistant layer, on the inner side of an inner liner in a region corresponding to a tread portion. The gel sheet 5 is made of a silicone compound, a urethane compound, a styrene compound, or an ethylene compound, and has needle penetration of 50 or more after curing and an Asker C hardness of 40 or less. The gel sheet 5 has no substantial fluidity.

For the gel sheet 5 in the present invention, the needle penetration after curing is set at 50 or more, preferably 50 to 150 inclusive, and most preferably 50 to 80 inclusive, and the Asker C hardness is set at 40 or less, preferably 0 to 40 inclusive, and most preferably 0 to 30 inclusive.

With these settings, when a puncture hole passing through the gel sheet 5 is created, the gel sheet 5 around the puncture hole contracts to seal the puncture hole after a foreign substance such as a nail is detached. As a result, the gel sheet 5 can prevent a rapid decrease in a tire inflation pressure

In addition, since the gel sheet 5 has no substantial fluidity, the gel sheet 5 neither concentrates at a center region in the tire width direction nor is unevenly distributed even when the tire rotates in a high speed. Consequently, the uniformity of the tire is maintained.

A gel material made of a silicone resin, a urethane resin, or a styrene resin forming the gel sheet 5 is made of a soft material having: intermediate properties between a liquid and a solid; sticking properties and excellent adhesion properties to a surface of any material; and high flexibility with which to maintain its shape after forming. Therefore, the gel material especially has an excellent characteristic in contractility of the puncture hole after a foreign substance such as a nail is detached. Furthermore, each of these gel materials has a characteristic in which the sticking properties, the adhesion properties and also the physical properties can be adjusted by crosslinking the gel material with irradiation of an active ray such as an electron ray, a gamma ray, and an ultraviolet ray under desired conditions.

In the present invention, if the physical properties of the gel sheet 5 after curing deviate from the ranges described above, the gel sheet 5 around the puncture hole does not produce a sufficient contractile force after the foreign substance such as a nail is detached. Consequently, sealability decreases.

Here, the needle penetration of the gel sheet 5 of the present invention is a value measured under the conditions of a load of 50 g and a measurement time of five seconds in accordance with JIS K 2207. The Asker C hardness is a value measured in accordance with The Society of Rubber Industry, Japan Standard (SRIS) 0101.

The thus configured pneumatic tire T of the present invention can keep the displacement (uneven distribution) of the gel sheet 5 in the tire width direction within 10 mm or less even after the tire is caused to run at a running speed of 90 km/h for eight hours. This can surely prevent the deterioration in uniformity without influencing the effect of closing the puncture hole.

The gel sheet 5 of the present invention has excellent adhesion properties to the surface of any material, as described above. Therefore, in the case where the gel sheet 5 is disposed on the inner side of the inner liner 4, the gel sheet 5 can be directly adhered to the inner side of the inner liner 4. However, the gel sheet 5 is preferably fixed on the inner side of the inner liner 4 with an adhesive in order to prevent the gel sheet 5 from being displaced or unevenly distributed on the inner surface of the tire due to the penetration of a foreign substance at a time of puncture. For the adhesive, preferably used are an organic adhesive such as a cyanoacrylate adhesive (an instant adhesive), a urethane adhesive, a SBR adhesive, a SBS adhesive, and an isobutylene adhesive, and other types of adhesives. For this case, the thickness of the adhesive is preferably set at 1 mm or less.

As described above, the gel sheet can be easily attached to a normal tire afterward. Thus, the gel sheet is excellent in versatility, and is able to keep the gauge uniform and to enhance the uniformity.

Examples of the silicone compound forming the gel sheet 5 are diorganopolysiloxane and organo hydrogen polysiloxane. Examples of the urethane compound are polyisocyanate and a compound containing active hydrogen. Examples of the polyisocyanate are tolylene diisocyanate, diphenylmethane diisocyanate, polymethylene polyphenyl polyisocyanate, hexamethylene diisocyanate, xylylene isocyanate, and the like. Examples of the compound containing active hydrogen are polyether polyol, polyester polyol, acrylic polyol, and the like.

In addition, examples of the styrene compound are styrene-ethylene/propylene-styrene block copolymer, styrene-ethylene/butylene-styrene block copolymer, a hydrogenated product of styrene butadiene rubber, and the like. An example of the ethylene compound is ethylene-stylene copolymer.

Note that the Asker C hardness of the gel sheet 5 may be adjusted by adjusting the crosslink density of each of the above-mentioned compounds, specifically, by adjusting the number of functional groups that form crosslinks and the amount of crosslinking agent added. In addition, the Asker C hardness of the gel sheet 5 can be adjusted by incorporating an oil material such as a paraffin oil, or a naphthene oil into the above-mentioned compound.

In the present invention, the compression set of the above-described gel sheet 5 is set at 20% or less. This compression set is adjusted preferably to 5% to 20% inclusive, and most preferably to 5% to 10% inclusive. With this level of the compression set, the gel sheet 5 is surely prevented from being unevenly distributed on the inner surface of the tire at the time of high speed running.

The above-described physical properties of the gel sheet 5 may be measured by using, as a test sample, the gel sheet directly taken out of the pneumatic tire T. The needle penetration is measured in accordance with JIS K 2207 (the conditions of a load of 50 g and a measurement time of five seconds). The Asker C hardness is measured in accordance with The Society of Rubber Industry, Japan Standard (SRIS) 0101. The compression set is measured in accordance with JIS K 6262.

In the present invention, preferably, the thickness of the above-described gel sheet 5 is set at 2 mm to 6 mm inclusive. The gel sheet 5 less than 2 mm thick may have an insufficient effect of closing the puncture hole in some cases. The gel sheet 5 more than 6 mm thick increases the weight of the tire although having a sufficient effect of closing the puncture hole.

More preferably, a barrier sheet 7 made of a resin film is disposed between the inner liner 4 and the gel sheet 5, as shown in Fig. 2. By thus disposing the barrier sheet, a disperse medium or solvent is prevented from moving from the inner liner 4 to the gel sheet 5 side. Consequently, the gel sheet 5 is prevented from degrading in the physical properties, and thereby is allowed to maintain an excellent sealing effect for a long period of time.

A material of the resin film for forming the above-described barrier sheet 7 is not limited in particular. However, it is preferable to use polyethylene, polypropylene, polyvinylidene chloride, or the like. In addition, when the barrier sheet 7 is disposed, the barrier sheet 7 and the gel sheet 5 are preferably bonded together to form a single unit at the time of forming the gel sheet 5 in order to increase the adhesiveness between the barrier sheet 7 and the gel sheet 5.

In the present invention, more preferably, the inner surface of the gel sheet 5 is coated with a protective sheet 8 made of a resin film, as shown in Fig. 3. This coating can suppress the degradation of the gel sheet 5 and maintain the excellent sealing effect for a long period of time. A material of the resin film for forming the protective sheet 8 is not limited in particular. However, it is preferable to use a material with low permeability (such as polyethylene, and polyvinylidene chloride).

As described above, the pneumatic tire of the present invention uses, as a puncture-resistant layer disposed on the inner side of a tread portion, the gel sheet having the predetermined physical properties, instead of an adhesive sealant having fluidity. With the gel sheet, the puncture-resistant layer is prevented from being unevenly distributed at the time of high speed running while maintaining favorable sealability, and thereby the uniformity of the tire is enhanced. Having a simple structure and an excellent advantageous effect, the pneumatic tire of the present invention is widely employed as a pneumatic tire with a sealing function at the time of puncture.

### EXAMPLES

A conventional type of tire having an adhesive sealant as a puncture-resistant layer (corresponding to example 1 in Japanese patent application *Kokai* publication No. 2003-183623) and a tire of the present invention having a gel sheet as the puncture-resistant layer were produced with a tire size of 205/65R15 and with a tire structure as shown in Fig. 1. In addition, for each of the tires, the thickness of the puncture-resistant layer was set at 5 mm, and the gel sheet of the present invention was formed by use of a gel sheet containing ethylene-stylene copolymer as its main component (the needle penetration of 60, the Asker C hardness of 15, and the compression set of 8%).

After each tire was mounted onto a rim, the tire was inflated to an air pressure of 210kPa. Thereafter, by use of an indoor drum-testing machine, each resultant tire was caused to run at a running speed of 90km/h for eight hours. Then, measurement was made on a degree to which left and right end portions of the puncture-resistant layer were unevenly distributed (moved) on the inner surface of the tire after the running.

The following result was obtained. For the conventional type of tire, the width of the puncture-resistant layer after the running decreased by 18 mm from that before the running, while for the tire of the present invention, the width of the puncture-resistant layer was not changed at all before and after the running.

From this result, the following was confirmed. In the conventional type of tire in which the adhesive sealant is disposed as the puncture-resistant layer, the puncture-resistant layer moves at the time of high speed running, and thereby is more unevenly distributed on the inner surface of the tire. On the other hand, in the present invention in which the gel sheet is disposed as the puncture-resistant layer, the movement or uneven distribution of the puncture-resistant layer is not observed at all and the uniformity of the tire is enhanced.

## Claims

1. A pneumatic tire comprising a gel sheet as a puncture-resistant layer, the gel sheet disposed on the inner side of an inner liner in a region corresponding to a tread portion, the gel sheet made of any of a silicone compound, a urethane compound, a styrene compound, and an ethylene compound, the gel sheet having needle penetration of 50 or more after curing and having an Asker C hardness of 40 or less.

2. The pneumatic tire according to claim 1, wherein a compression set of the gel sheet is 20% or less.

3. The pneumatic tire according to any one of claims 1 and 2, wherein a thickness of the gel sheet is 2 mm to 6 mm inclusive.

4. The pneumatic tire according to any one of claims 1 to 3, wherein a barrier sheet made of a resin film is disposed between the inner liner and the gel sheet.

5. The pneumatic tire according to any one of claims 1 to 4, wherein the inner surface of the gel sheet is coated with a protective sheet made of a resin film.
